Europäisches Patentamt

European Patent Office

Office européen des brevets

(11) Veröffentlichungsnummer: **0 181 321**
A2

## (12) EUROPÄISCHE PATENTANMELDUNG

(21) Anmeldenummer: 85890276.0

(22) Anmeldetag: 07.11.85

(51) Int. Cl.⁴: **H 04 N 7/13**

(30) Priorität: 08.11.84 AT 3545/84

(43) Veröffentlichungstag der Anmeldung:
14.05.96 Patentblatt 96/20

(84) Benannte Vertragsstaaten:
AT DE FR GB IT NL SE

(71) Anmelder: MUPID COMPUTER GESELLSCHAFT m.b.H.
Münzgrabenstrasse 11
A-8010 Graz(AT)

(72) Erfinder: Pölzler, Ernst, Dipl.-Ing.
Ziegelofengasse 313
A-8225 Pöllach(AT)

(72) Erfinder: Posch, Reinhard, Univ. Prof. Dr.
Pachernweg 4e
A-8042 Graz(AT)

(54) Verfahren und Anordnung zur Übertragung des Signals eines Bildpunktes.

(57) Eine Videokamera (2) ist mit einem Bildschirmgerät (4) synchronisiert. Ihr Ausgangssignal wird auf Anforderung eines Mikrocomputers (3) mit Hilfe eines Analogspeichers (5) und eines Analog/Digital-Wandlers (6) über einen Datenkanal (10) an den Mikrocomputer (3) übertragen. Durch den Zeitpunkt der Übertragung ist die Ursprungsposition des Bildpunktes (1) festgelegt. Der Mikrocomputer (3) stellt den Bildpunkt (1) am Bildschirmgerät (4) zeitrichtig dar. Der Übertragungsvorgang ist von der eigentlichen Bilderstellung unabhängig und die Anzahl der je Abtastvorgang übertragenen Bildpunkte (1) ist frei wählbar. Somit kann auch mit einfachen, langsamen Bauteilen eine Bilddigitalisierung in guter Qualität erfolgen.

FIG 1

EP 0 181 321 A2

MUPID COMPUTER GESELLSCHAFT mbH

Graz

Unser Zeichen

VPA 84 P 7020 E

## Verfahren und Anordnung zur Übertragung des Signals eines Bildpunktes

Die Erfindung betrifft ein Verfahren zur Signalübertragung eines Bildpunktes von einer Abtasteinrichtung über einen Analog/Digital-Wandler an eine mit der Abtasteinrichtung synchronisierte Ausgabeeinheit.

Ein nach diesem Verfahren arbeitendes Übertragungssystem ist aus der DE 28 08 640 C2 bekannt. Es enthält neben einer Fernsehkamera und einem Analog/Digital-Wandler auch noch einen Sender-Bildwiederholspeicher, einen Sender-Pufferspeicher, einen Übertragungskanal, einen Empfänger-Pufferspeicher, einen Empfänger-Bildwiederholspeicher, einen Digital/Analog-Wandler und einen Fernsehempfänger. Das Bild der Fernsehkamera mit 320.000 Bildpunkten wird in eine entsprechende Anzahl von Codewörtern umgesetzt und abgespeichert. Die Übertragung der Codewörter erfolgt in Impulspaketen, die empfangsseitig wieder zu einem vollständigen Bild zusammengesetzt werden. Die Position der einzelnen Bildpunkte wird durch mitlaufende Zähler bestimmt, das gesamte System muß mit hoher Taktrate (8 MHz) betrieben werden und es müssen entsprechend viele Speicherplätze für die Codewörter und eine Pufferung vorhanden sein.

Aus der EP 39 899 A3 ist bekannt, bei der Erzeugung von Abtastsignalen deren Spitzenwert vor der Analog/Digital-Wandlung einem Haltespeicher zuzuführen. Dies dient jedoch nur der Normierung des Signalspitzenwertes, der nach der Digitalisierung einem Speicher zugeleitet wird und nach Rückwandlung einem Analogvergleicher als Referenzpegel für Abtastsignale dient. Dieses System hat aber nicht die Digitalisierung und Übertragung von Bildpunkten an eine Ausgabeeinheit zum Inhalt.

Der Erfindung liegt dagegen die Aufgabe zugrunde, mit Hilfe eines Verfahrens zur Betreibung eines Übertragungssystems der eingangs erwähnten Art, den zur Bilddigitalisierung notwendigen schaltungstechnischen Aufwand unter grundsätzlicher Beibehaltung der Bildqualität zu vermindern.

Die Aufgabe der Erfindung wird gemäß Patentanspruch 1 dadurch gelöst, daß das analoge Ausgangssignal der Abtasteinrichtung von einem Analogspeicher zwischengespeichert wird, daß das zwischengespeicherte Signal des Bildpunktes von dem Analog/Digital-Wandler digitalisiert und an einen Mikrocomputer weitergeleitet wird, der den Zeitpunkt der Zwischenspeicherung des Signals relativ zum Beginn eines Abtastvorganges festlegt und die Übertragung derart steuert, daß das Signal zeitrichtig an der Ausgabeeinheit dargestellt wird.

Das Verfahren nach Patentanspruch 1 hat den Vorteil, daß der Abtastvorgang eines Bildes unabhängig von der Übertragung eines Bildpunktes und seiner Darstellung an der Ausgabeeinheit erfolgt. Dadurch können einzelne Bildpunkte gezielt zur Übertragung ausgewählt werden. Da Abtasteinrichtung und Ausgabeeinheit synchron laufen, genügt es, lediglich den Zeitpunkt der Zwischenspeicherung des Signals festzuhalten, um den Bildpunkt eindeutig zu lokalisieren.

Die Zuordnung des Zeitpunktes der Zwischenspeicherung zum jeweiligen Bildpunkt wird dadurch vereinfacht, daß der Zeitpunkt der Zwischenspeicherung zusätzlich zum Signal des Bildpunktes vom Analogspeicher oder Analog/Digital-Wandler dem Mikrocomputer zugeleitet wird.

Auf eine Sperrung der Verbindung zwischen Abtasteinrichtung und Analogspeicher kann bei gleichzeitig exakter Festlegung des Zeitpunktes der Zwischenspeicherung verzichtet werden, wenn die Signalübertragung vom Mikrocomputer durch Aktivieren des Analogspeichers und Starten des Analog/Digital-Wandlers eingeleitet wird.

Die Übertragung einer frei wählbaren Anzahl von Bildpunkten je Abtastvorgang ermöglicht eine Anpassung des Verfahrens zur Signalübertragung an den jeweiligen Einsatzbereich und die jeweils verwendeten Bauteile und Geräte. So kann insbesondere bei stehenden oder nur langsam bewegten Bildern eine geringere Übertragungsgeschwindigkeit für Bildpunkte oder als rationelle Arbeitsweise eine auf die Art des Abtastvorganges optimierte Folge von Bildpunkten gewählt werden. Gerade bei Kombination einer schnell arbeitenden Abtasteinrichtung mit einem langsamen Analog/Digital-Wandler kann es vorteilhaft sein, nach mehr als einem Abtastvorgang je einen Bildpunkt zu übertragen. Beispielsweise wird so lediglich bei jedem dritten Abtastvorgang ein Bildpunkt digitalisiert.

Bildpunkte können auch in einzelnen Bereichen eines Bildes im Sinne einer höheren Auflösung bis zur maximalen Auflösung der Abtasteinrichtung übertragen werden. Dadurch wird nicht nur unnötig hoher Datenanfall aus weniger bedeutenden Bildbereichen vermieden, es kann bei der Signalübertragung auch wieder mit einem langsameren und preisgünstigeren Analog/Digital-Wandler gearbeitet werden, ohne die wichtigen Informationen zu verlieren. Ein derartiges Verfahren ermöglicht auch die Erstellung einer Ausschnittvergrößerung in guter Qualität.

Eine automatische Überwachung von Räumen oder Gegenständen ist dadurch möglich, daß einzelne Bereiche des übertragenen Bildes vom Mikrocomputer in Bezug auf Signaländerung in aufeinanderfolgenden Abtastvorgängen verglichen werden. Weitere Einsatzmöglichkeiten ergeben sich dadurch, daß der Pegel des digitalisierten Signals des Bildpunktes vom Mikrocomputer festgestellt und ein Steuer- oder Regelvorgang ausgelöst wird. Dadurch kann eine Beeinflussung der Darstellung des Bildes an der Ausgabeeinheit erfolgen, beispielsweise die Umsetzung von Grautönen in Farbtöne. Darüber hinaus ermöglicht es eine automatische Bildauswertung und Verarbeitung.

Bei einer besonders zweckmäßigen Vorrichtung zur Durchführung des erfindungsgemäßen Verfahrens ist zwischen dem Signalausgang der Abtasteinrichtung und dem Eingang des Analog/Digital-Wandlers der Analogspeicher angeordnet und der Analog/Digital-Wandler über einen Datenkanal sowie über Befehlsleitungen mit dem Mikrocomputer verbunden, an den ausgangsseitig die Ausgabeeinheit angeschlossen ist. Um preiswerte und zuverlässige Geräte einzusetzen, besteht die Abtasteinrichtung aus einer Videokamera und die Ausgabeeinheit aus einem Bildschirmgerät. Eine derartige Vorrichtung ist für eine große Zahl von Anwendungen zweckmäßig ausgestattet.

Die Erfindung wird anhand eines Ausführungsbeispieles mit Zeichnungen erläutert. Es zeigen:

Fig. 1 ein schematisches Blockschaltbild des Ausführungsbeispieles und

Fig. 2 unterschiedliche Bereiche des abgetasteten Bildes.

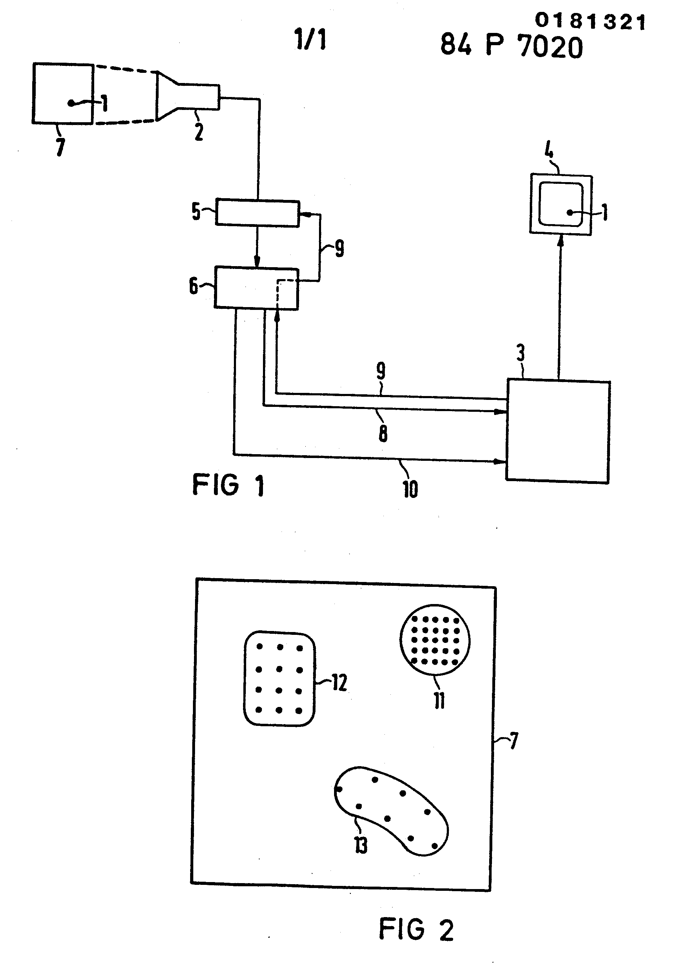

Bei dem in Fig. 1 dargestellen Ausführungsbeispiel wird ein Bild 7 von einer Videokamera 2 aufgezeichnet und über einen Mikrocomputer 3 auf einem Bildschirmgerät 4 dargestellt. Die Übertragungseinrichtung besteht aus einem Analogspeicher 5 als Zwischenspeicher des Signalpegels und einem Analog/ Digital-Wandler 6. Dieser ist über Befehlsleitungen 8, 9 und einen Datenkanal 10 mit dem Mikrocomputer 3 verbunden. Die Videokamera 2 und das Bildschirmgerät 4 laufen synchron.

Der Analog/Digital-Wandler 6 sendet ein Bereit-Signal
über die erste Befehlsleitung 8 an den Mikrocomputer 3.
Darauf wird die Übertragung zu einem vom Mikrocomputer 3
bestimmten Zeitpunkt durch diesen mit einem Lese-Signal
über die zweite Befehlsleitung 9 eingeleitet. Dieses Lese-Signal bewirkt das Halten des momentan am Ausgang der
Videokamera 2 anliegenden analogen Signals eines Bildpunktes 1 im Analogspeicher 5. Gleichzeitig wird dieser
Zeitpunkt im Analogspeicher 5 gespeichert und der Analog/
Digital-Wandler 6 gestartet. Das digitalisierte Bildsignal wird nun über den Datenkanal 10 an den Mikrocomputer
3 weitergeleitet. Der Zeitpunkt der Zwischenspeicherung
des Signals ist relativ zum Beginn des Abtastvorganges
festgelegt und wird gemeinsam mit dem digitalisierten
Bildsignal im Mikrocomputer 3 gespeichert. Durch den
synchronen Lauf von Videokamera 2 und Bildschirmgerät 4
ist die Lage des Bildpunktes 1 eindeutig festgelegt, somit kann dieser Bildpunkt 1 beliebige Abtastvorgänge später auf dem Bildschirmgerät 4 dargestellt werden.

Diese zeitliche Entkopplung des Abtastvorganges, des
Übertragungsvorganges und der Darstellung des Bildes am
Bildschirmgerät 4 ermöglicht zahlreiche Anwendungen des
erfindungsgemäßen Verfahrens. Insbesondere ist die Geschwindigkeit der Digitalisierung nicht mehr mit der Abtastfrequenz der Videokamera 2 gekoppelt und es kann ein
vergleichsweise langsam arbeitender Analog/Digital-Wandler 6 eingesetzt werden. Das Auflösungsvermögen der Videokamera 2 kann auch dann bei der Wiedergabe erhalten
bleiben, die Übertragung des Bildes erfolgt in Teilen
über entsprechend viele Abtastvorgänge. Dieses Verfahren
ist bei stehenden oder nur langsam bewegten Bildern 7 anwendbar. Um eine derartige Vorrichtung auch bei schneller
bewegten Bildern 7 einsetzen zu können, ist das Auflösungsvermögen bei der Übertragung entsprechend herabzusetzen.

Fig. 2 zeigt nun eine weitere Anwendungsmöglichkeit des
Ausführungsbeispieles. Durch geeignete Programmierung des
Mikrocomputers 3 kann in einzelnen Bereichen 11, 12, 13
des Bildes 7 mit unterschiedlichen Auflösungen übertragen
werden. Da jeder einzelne Bildpunkt 1 durch den Mikrocomputer 3 ansteuerbar ist, lassen sich selbst komplizierte
Bildpunktfolgen zusammenstellen. Zur Darstellung am Bildschirmgerät 4 ist die Form und Auflösung jedes Bereiches
11, 12, 13 beliebig wählbar.

Diese flexible Anwendbarkeit ermöglicht nicht nur ein Optimieren der Übertragungsgeschwindigkeit auf die jeweils
zum Einsatz kommenden Geräte und Bauteile, sondern auch
einen optimalen Nutzen in verschiedensten Einsatzgebieten. Da die einzelnen Bildsignale dem Mikrocomputer 3 in
digitalisierter Form vorliegen, kann dieser sie abspeichern, bearbeiten und mit gespeicherten Werten vergleichen. Das ermöglicht beispielsweise den Einsatz dieses
Übertragungssystems zur Überwachung eines Raumes. Die
Signale einer im Bild 7 befindlichen Türe werden auf Veränderung geprüft, das Öffnen dieser Türe wird somit festgestellt und Alarm ausgelöst. Eine weitere Einsatzmöglichkeit ist die farbige Darstellung aufgenommener Grauwerte eines Halbtonbildes 7 am Bildschirmgerät 4. Jedem
Grauwert wird vom Mikrocomputer 3 ein Farbton zugeordnet,
was eine Analyse des übertragenen Bildes 7 wesentlich erleichtert. Die Abspeicherung eines gesamten Bildes 7 in
einer separaten Speichereinrichtung kann gleichfalls
durch den Mikrocomputer 3 erfolgen. Ein Startimpuls für
die spätere Darstellung am Bildschirmgerät 4 ist mit den
digitalisierten Bildpunkten 1 und den entsprechenden
Zeitpunkten der Zwischenspeicherung abzuspeichern.

Bei entsprechender Synchronisierung können die Bildpunkte 1 vom Mikrocomputer 3 auch an andere periphere Geräte
wie Speicher, Sensoren oder ähnl. übertragen werden. Anstelle der Videokamera 2 können  auch andere Abtasteinrichtungen wie Faksimilegeräte, Röntgengeräte oder Rasterelektronenmikroskope verwendet werden. Somit erstrecken sich die Einsatzmöglichkeiten der Erfindung von der Bürokommunikation über Sicherungstechnik, Steuer- und Regeltechnik bis zur medizinischen Anwendung.


10 Patentansprüche
 2 Figuren

Patentansprüche

1. Verfahren zur Signalübertragung eines Bildpunktes (1) von einer Abtasteinrichtung (2) über einen Analog/Digital-Wandler (6) an eine mit der Abtasteinrichtung (2) synchronisierte Ausgabeeinheit (4), dadurch gekennzeichnet , daß das analoge Ausgangssignal der Abtasteinrichtung (2) von einem Analogspeicher (5) zwischengespeichert wird, daß das zwischengespeicherte Signal des Bildpunktes (1) von dem Analog/Digital-Wandler (6) digitalisiert und an einen Mikrocomputer (3) weitergeleitet wird, der den Zeitpunkt der Zwischenspeicherung des Signals relativ zum Beginn eines Abtastvorganges festlegt und die Übertragung derart steuert, daß das Signal zeitrichtig an der Ausgabeeinheit (4) dargestellt wird.

2. Verfahren nach Anspruch 1, dadurch gekennzeichnet , daß der Zeitpunkt der Zwischenspeicherung zusätzlich zum Signal des Bildpunktes (1) vom Analogspeicher (5) oder Analog/ Digital-Wandler (6) dem Mikrocomputer (3) zugeleitet wird.

3. Verfahren nach Anspruch 1 oder 2, dadurch gekennzeichnet , daß die Signalübertragung vom Mikrocomputer (3) durch Aktivieren des Analogspeichers (5) und Starten des Analog/Digital-Wandlers (6) eingeleitet wird.

4. Verfahren nach einem der vorherigen Ansprüche, dadurch gekennzeichnet , daß eine frei wählbare Anzahl von Bildpunkten (1) je Abtastvorgang übertragen wird.

5. Verfahren nach einem der vorherigen Ansprüche, dadurch gekennzeichnet , daß nach mehr als einem Abtastvorgang je ein Bildpunkt (1) übertragen wird.

6. Verfahren nach einem der vorherigen Ansprüche,
d a d u r c h   g e k e n n z e i c h n e t ,   daß
Bildpunkte (1) in einzelnen Bereichen (11) eines Bildes
(7) im Sinne einer höheren Auflösung bis zur maximalen
Auflösung der Abtasteinrichtung (2) übertragen werden.

7. Verfahren nach einem der vorherigen Ansprüche,
d a d u r c h   g e k e n n z e i c h n e t ,   daß einzelne Bereiche (11,12,13) des übertragenen Bildes (7) vom
Mikrocomputer (3) in Bezug auf Signaländerung in aufeinanderfolgenden Abtastvorgängen verglichen werden.

8. Verfahren nach einem der vorherigen Ansprüche,
d a d u r c h   g e k e n n z e i c h n e t ,   daß der
Pegel des digitalisierten Signals des Bildpunktes (1) vom
Mikrocomputer (3) festgestellt und ein Steuer- oder Regelvorgang ausgelöst wird.

9. Vorrichtung zur Durchführung des Verfahrens nach einem
der vorherigen Ansprüche,
d a d u r c h   g e k e n n z e i c h n e t ,   daß zwischen dem Signalausgang der Abtasteinrichtung (2)  und
dem Eingang des Analog/Digital-Wandlers (6) der Analogspeicher (5) angeordnet ist und daß der Analog/Digital-
Wandler (6) über einen Datenkanal (10) sowie über Befehlsleitungen (8,9) mit dem Mikrocomputer (3) verbunden ist,
an den ausgangsseitig die Ausgabeeinheit (4) angeschlossen ist.

10. Vorrichtung nach Anspruch 9,
d a d u r c h   g e k e n n z e i c h n e t ,   daß die
Abtasteinrichtung (2) aus einer Videokamera und die Ausgabeeinheit (4) aus einem Bildschirmgerät besteht.

0181321

84 P 7020

FIG 1

FIG 2